# EUROPEAN PATENT SPECIFICATION

(11) **EP 2 889 132 B1**
(45) Date of publication and mention of the grant of the patent: **25.09.2019**
(21) Application number: 14193982.7
(22) Date of filing: 20.11.2014
(51) Int. Cl.: B32B 5/00

(54) **A Reinforcing Pin for a Laminated Composite Structure and Related Methods**
Verstärkungsstift für Schichtverbundstruktur und zugehöriges Verfahren
Cheville de renfort pour une structure composite stratifiée et procédés associés

(30) Priority: 17.12.2013 GB 201322276
(43) Date of publication of application: 01.07.2015
(73) Proprietor: Rolls-Royce plc, London SW1E 6AT (GB)
(72) Inventor: Yasaee, Mehdi, Derby, Derbyshire DE24 8BJ (GB); Lycett, Alex, Derby, Derbyshire DE24 8BJ (GB)
(74) Representative: Rolls-Royce plc

(56) References cited:
- US-A1- 2003 203 179
- US-A1- 2005 095 394
- US-A1- 2013 266 765

## Description

The present disclosure relates to a reinforcing pin for reinforcing a laminated composite structure. The disclosure also relates to a method for producing a reinforcing pin for a laminated composite structure, and to a method for reinforcing a laminated composite structure.

It is well known in the field of composite structures that two-dimensional composite laminates are relatively weak in the so-called "through thickness" or z-direction. At the interfaces between adjacent laminae in such structures there is a high tendency for the plies to de-bond or delaminate. This problem has been found to be particularly prevalent in composite laminates in which adjacent laminae have constituent fibres which are not aligned. This problem has therefore led to the development of various types of "through-thickness-reinforcement", commonly known by the acronym TTR, such as z-pinning, stitching, tufting, and three-dimensional weaving, all of which will be well known to those of skill in the art.

Z-pinning is a technique whereby a plurality of small pins are inserted into an uncured laminated composite structure such that the pins extend between adjacent laminae in the structure, which provides a significant improvement in through-thickness strength and resistance to delamination of a composite structure. The most common type of pin insertion process is currently to use an ultra-sonic hammer and pre-formed arrays of pins. The pins are held in spaced relation to one another in a foam carrier. The foam carrier is positioned against a surface of the composite structure and the ultrasonic hammer is used to press the pins through and out of the foam and into the composite structure. This z-pinning technique requires the pins to have chamfered tips and for their outer surfaces to be relatively smooth. As the ultrasonic hammer urges the pins into the composite structure, it induces high frequency vibrations in them. The vibrating chamfered tips of the pins locally heat up and soften the matrix resin of the composite material, allowing the pins to penetrate the composite material with minimal disruption to the fibres. This process is efficient and has therefore become widely used for large-scale production of TTR composite structures. However, as indicated above, it places particular design requirements on the form of the pins which must be used.

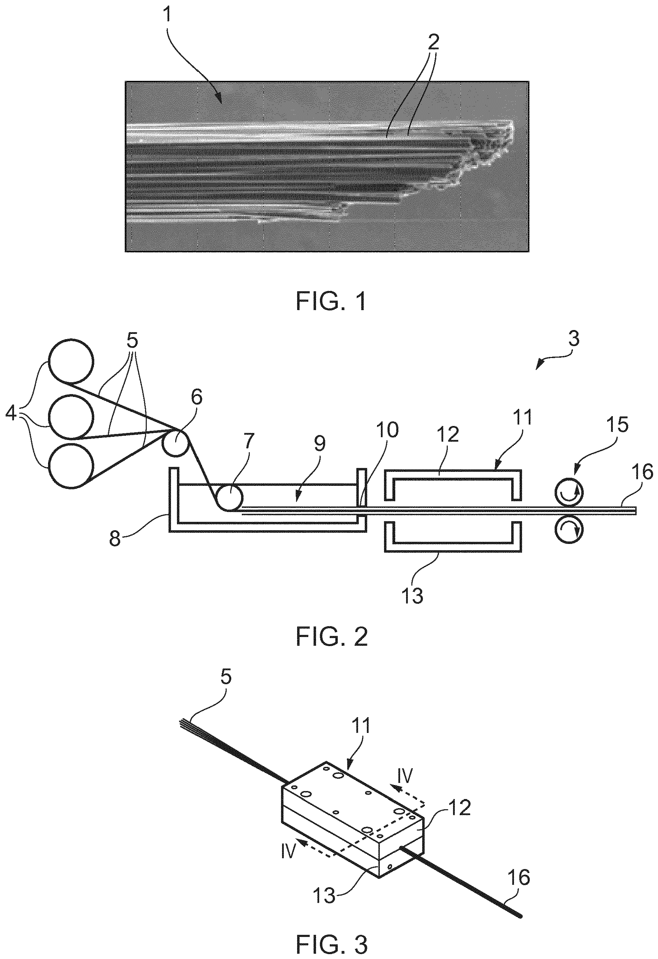

Fibrous composite pins are widely used for z-pinning in order to reinforce composite structures. Figure 1 (discussed in more detail below) shows a magnified view of a conventional fibrous composite reinforcing pin. Fibrous composite pins are commonly manufactured via a generally conventional pultrusion process which is effective to produce a length of rodstock having a uniform transverse cross-sectional shape. The reinforcing pins are cut from the rodstock and so also have a uniform transverse cross-sectional shape as well as having an outer surface which is generally smooth in the longitudinal direction. However, it has been found that the generally smooth outer surface of conventional fibrous composite pins can allow the pins to pull through the composite laminate structures which they are used to reinforce during the application of high loads to the structures, thereby allowing delamination still to occur under such conditions.US20030203179 discloses a pin reinforced crack resistant fiber reinforced composite.

It is an object of the present disclosure to provide an improved reinforcing pin for reinforcing a laminated composite material. It is another object of the present disclosure to provide an improved method for producing a reinforcing pin for use in a laminated composite structure. According to an aspect, there is provided a reinforcing pin for reinforcing a laminated composite structure, the reinforcing pin being formed from a plurality of fibres in a polymeric matrix, each of the fibres having the form of a helix extending along the length of the reinforcing pin.

The pin may have a non-circular shape in transverse cross-section.

The pin may have an irregular shape in transverse cross-section.

Optionally, said fibres are glass, but they may alternatively be carbon.

The fibres may be polymeric. The fibres may be aramid fibres.

The fibres may define a corrugated outer surface to the reinforcing pin.

According to second aspect, there is provided a laminated composite structure having a plurality of laminae formed of composite material, and at least one reinforcing pin according to the first aspect, the or each reinforcing pin being provided within the structure so as to extend between adjacent laminae.

According to a third aspect, there is provided a method for producing a reinforcing pin for use in a laminated composite structure, the method comprising the steps of: providing a plurality of polymeric fibres, wetting said fibres in a curable matrix material, drawing said wetted fibres through a heated die to form a partially cured rod of uniform cross-section, collectively twisting the fibres of the rod about the longitudinal axis of the rod so that each fibre adopts a helical configuration, and subsequently curing the matrix material to fix the helical configuration of the fibres.

The heated die may define a cavity through which the wetted fibres are drawn and which has a non-circular shape configured to impart a corresponding non-circular cross-sectional shape to the partially cured rod.

The cavity may have an oval shape.

Optionally, the heated die may define a cavity through which the wetted fibres are drawn and which has an irregular shape configured to impart a corresponding irregular cross-sectional shape to the partially cured rod.

Optionally, said fibres may be glass, but they may alternatively be carbon.

The fibres may be polymeric. The fibres may be aramid fibres.

According to a fourth aspect, there is provided a method for reinforcing a composite structure having a plurality of laminae of composite material, the method involving the insertion of at least one reinforcing pin in accordance with the first aspect into the composite structure such that the or each pin extends through at least some of said laminae.

The method of the fourth aspect may further include the steps of: forming at least one channel within the structure, the or each channel extending through at least some of the laminae of the structure and being configured to receive a respective said reinforcing pin; inserting the or each said reinforcing pin into a respective said channel; and at least partially curing the composite material.

The fibres may define a corrugated outer surface to the or each said reinforcing pin, and the method may further involve curing a curable matrix of the composite material so that the matrix flows into corrugations in the outer surface of the or each pin to anchor the pin within the composite structure.

The method of the fourth aspect may involve producing the or each said reinforcing pin by the method of the third aspect.

In any aspect, the laminated composite structure may be, for example, an organic matrix composite. The laminated composite structure may comprise organic matrix composite laminates, for example carbon fibre laminates. The laminated composite structure may comprise fibres (such as carbon fibres) formed in a plastic and/or epoxy resin matrix. The laminated composite structure may be a fibre reinforced plastic. The laminated composite structure may be formed of laminates comprising fibres (such as carbon fibres) formed in a plastic and/or epoxy resin matrix, and/or laminates comprising fibre reinforced plastic.

So that the disclosure may be more readily understood, and so that further features thereof may be appreciated, embodiments will now be described by way of example with reference to the accompanying drawings in which:
Figure 1 is a magnified image of a conventional fibrous composite reinforcing pin;
Figure 2 is a schematic cross-sectional view showing an apparatus suitable for preliminary stages in the production of a reinforcing pin in accordance with the present disclosure;
Figure 3 is a perspective view illustrating part of the apparatus shown in figure 2;
Figure 4 is a transverse cross-sectional view taken along line IV-IV of figure 3;
Figure 5 is a perspective view showing a length of rod produced using the apparatus illustrated in figures 2 to 4, the figure also showing schematically a subsequent stage in the production of a reinforcing pin in accordance with the present disclosure;
Figure 6 is a perspective view showing a reinforcing pin in accordance with the present disclosure;
Figure 7 is a schematic cross-sectional view showing a step in a method of reinforcing a laminated composite structure, in which the reinforcing pin of figure 6 is inserted into a channel provided in the composite structure; and
Figure 8 is a schematic cross-sectional view similar to that of figure 7, but which shows the finished reinforced structure following a curing process.

Turning now to consider the drawings in more detail, figure 1 shows part of a conventional fibrous composite reinforcing pin 1. The pin 1 is formed from a plurality of carbon or polymeric fibres 2 which are held in a resin matrix and which are all generally parallel to one another, and also parallel to the longitudinal axis of the pin 2. Fibrous reinforcing pins 1 of this type are commonly made via a pultrusion process and thus have a uniform cross-sectional shape along their length. As will thus be appreciated, the conventional pins 1 are thus smooth in the longitudinal direction.

Figure 2 shows generally conventional pultrusion apparatus 3 which may be used in the initial stages of production of reinforcing pins in accordance with the present disclosure. It is to be noted, however, that the illustrated pultrusion apparatus is merely exemplary and is not limiting, and other configurations of apparatus or equipment may be used instead, without departing from the scope of the claimed invention.

As will be appreciated by those of skill in the art, the pultrusion apparatus 3 comprises a series of reels 4 on which are wound long lengths of flexible fibres 5. The fibres 5 used in the present disclosure can be formed of various materials. For example, the fibres 5 may be aramid or formed from other polymeric materials, or could alternatively be carbon or glass. Aramid fibres 5 have been found by the inventors to provide particularly good performance characteristics.

The fibres 5 are arranged to pay out from the reels 4 and are arranged to pass collectively over a guide roller 6 and under a subsequent tension roller 7. The guide roller 6 and the tension roller 7 are arranged to direct the fibres 5 from their reels 4 and through a bath 8 which holds a reservoir of curable matrix material 9 in the liquid phase. The matrix material 9 may be a curable polymer such as a conventional epoxy resin or the like.

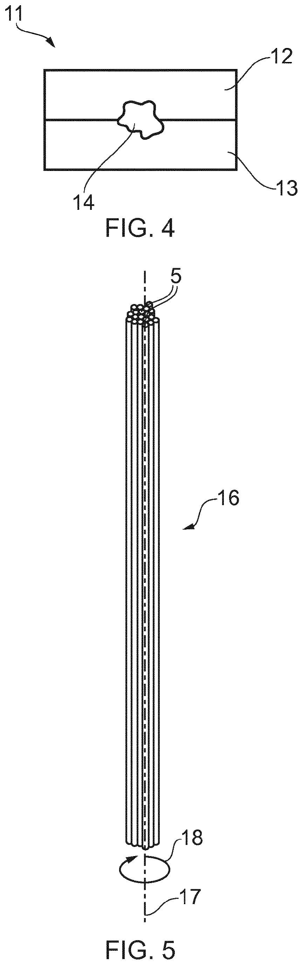

The fibres exit the bath 8 via an opening 10 which is sized and configured to remove excess resin from the fibres as they pass through it, and then pass through a heated die 11. The die is illustrated in more detail in figures 3 and 4, and in the arrangement shown comprises two die parts 12, 13. The die parts 12, 13 are configured to fit together to define therebetween a die cavity 14 (as illustrated most clearly in figure 4) through which the fibres 5 may be drawn. In the particular arrangement illustrated, the die cavity has a non-circular and irregular shape in transverse cross-section, as clearly illustrated in figure 4. It is to be noted, however, that other shapes are possible for the die cavity 14. For example, it is envisaged that in some embodiments the die cavity 14 could have an oval shape in transverse cross-section. However, it is envisaged that the die cavity 14 will not be circular in transverse cross-section.

As illustrated in figure 2, the apparatus 3 comprises a pull arrangement 15 which is operable to pull the fibres 5 from their reels 4, through the reservoir of liquid matrix material 9, and then through the shaped cavity 14 of the heated die 11.

The apparatus is thus used to draw the fibres 5 from their reels 4 and then collectively draw the fibres through the reservoir of liquid matrix material 9 such that the fibres are all wetted and thus impregnated with the matrix material. As the wetted fibres 5 exit the bath 8, they are pulled into the die cavity at one end, and are thereby gathered together in close and intimate contact with one another to define a group of fibres having a cross-sectional shape defined by the shape of the die cavity 14. So in the illustrated embodiment, the grouped fibres will be formed into an irregular cross-sectional shape corresponding to the shape of the die cavity 14.

As the wetted fibres 5 continue to be drawn through the die cavity 14, they are heated by the die 11. In this respect, it is important to note that the speed at which the fibres 5 are drawn through the die 11, and the temperature to which they are heated by the die 11 are determined in dependence on the curing characteristics of the matrix material 9, such that the matrix material is only partially cured as the wetted fibres 5 pass through the die 11. More particularly, it is envisaged that the draw speed of the fibres 5 and the temperature of the heated die 11 will be managed such that the matrix material 9 impregnated into the fibres 5 will cure to the so-called β-stage within the die 11. The limited partial cure of the matrix material 9 as the fibres are drawn through the die 11 is appropriate to stiffen the matrix material 9 sufficiently to hold the grouped fibres 5 relative to one another and thereby retain the cross-sectional shape imparted to the group by the die cavity 14, whilst maintaining sufficient softness to the matrix material 9 for subsequent stages in the production method, as will be described in more detail below.

As will therefore be appreciated, the grouped fibres 5 exit the pultrusion apparatus 3 in the form of a partially cured rod 16, as illustrated schematically in figure 2 and in more detail in figure 5. The fibres 5 in the rod 16 are parallel to one another and to the longitudinal axis 17 of the rod, and the rod 16 has a uniform transverse cross-sectional shape which corresponds to the shape of the die cavity 14. At this stage of the production process the rod 16 thus has an outer surface which is smooth in the longitudinal direction, like the prior art fibrous composite reinforcing pin illustrated in figure 1. However, the partially cured rod 16 is then subjected to another processing step in which it is twisted about its longitudinal axis 17. This may be achieved by rotating one end of the rod 16 about the axis 17 (optionally as the fibres 5 continue to be drawn through the apparatus), as indicated schematically by arrow 18. Alternatively, the rod 16 may be cut free from the fibre tows exiting the pultrusion apparatus 3 and then the two ends of the rod 16 may be rotated in opposite directions to one another.

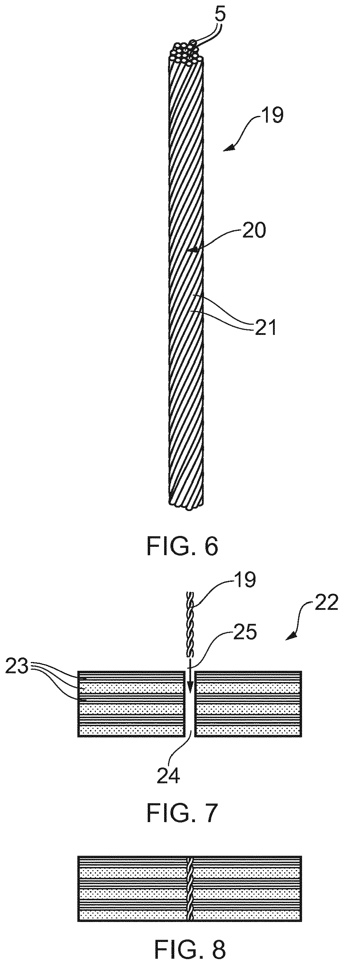

As will be appreciated, relative rotation of the ends of the rod 16 is effective to twist the constituent fibres 5 of the rod along their lengths, so that they each adopt the form of a helix along the length of the rod 16. This manipulation of the rod 16 and its constituent fibres 5 is permitted because the matrix material 9 within which the fibres 5 are held is only partially cured at this stage of the process and so is sufficiently soft to permit this manipulation. After the rod 16 is twisted in this manner it is then heated again to fully cure the matrix material and thereby fix the helical configuration of the fibres 5, after which the rod 16 may be cut into discrete lengths defining respective reinforcing pins 19 as illustrated in figure 6, where the helical configuration of the fibres 5 is clearly illustrated.

The resulting reinforcing pin 19 has an irregular and non-circular cross-sectional shape and outer surface 20 which is defined by the peripheral fibres 5. The outer surface 20 of the pin 19 is thus corrugated because of the helical configuration of the fibres 5, so as to have a plurality of corrugations 21 defined by the alternating turns of the helically wound fibres 5. As will be appreciated, in embodiments in which the partially cured rod 16 has an irregular cross-sectional shape, the irregular cross-sectional shape further contributes to the corrugated nature of the outer surface 20.

Turning now to consider figure 7, there is illustrated a section of a laminated composite structure 22 which has a plurality of laminae 23, each comprising a plurality of fibres held in a curable resin matrix. The particular composite structure 22 illustrated is configured such that alternate laminae 23 have their constituent fibres arranged orthogonally to one another, but other fibre orientations are also possible.

In order to reinforce the composite structure 22 according to the present disclosure, a channel 24 is formed through a region of the structure so as to extend through the laminae 23. The channel 24 may be formed by initially softening the composite material via the application of heat, pressing a metal needle (not shown) through the laminae 23 and then removing the needle to leave the channel 24 as shown. The channel 24 has a diameter appropriate to receive a reinforcing pin 19 of the type described above as a close sliding fit. The reinforcing pin 19 described above is then inserted axially into the preformed channel 24 as indicated by arrow 25.

Figure 8 shows the reinforcing pin 19 fully received within the preformed channel 24. As will be noted, in this position the pin 19 extends through and between adjacent laminae, thereby bridging the interfaces between adjacent laminae. Once the reinforcing pin 19 is received in the channel 24 as shown, the composite material of the structure is then cured, whereupon the matrix material will flow into the corrugations 21 in the outer surface 20 of the reinforcing pin 19. Furthermore, the matrix material of the composite structure may fuse with the matrix material 9 of the pin. The pin 19 is thereby securely anchored within the composite structure 22.

As will be appreciated, it will be usual to reinforce a laminated composite structure 22 in this way by the use of a plurality of reinforcing pins 19, each pin being inserted into a respective preformed channel 24.

It has been found that reinforcing pins 19 of the configuration described above offer significant benefits when compared to conventional smooth-surface fibrous composite pins 1 of the type illustrated in figure 1. In particular it has been found that the corrugated outer surface 20 of the pins 19, arising from the helical form of the fibres 5, as well as the optional irregular cross-sectional shape of the rod 16 from which the pins 19 are formed, provides a significant increase in grip between the pins 19 and the laminae 23 through which they extend when used to reinforce a laminated composite structure 22 in the manner described above. The pins 19 of the present disclosure effectively lock into the composite structure much more securely than the prior art pins 1. This results in significant absorption of delamination energy and an effective reduction in delamination propagation lengths when the composite structure 22 is subjected to severe out of plane loads.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

## Claims

1. A reinforcing pin (19) for reinforcing a laminated composite structure (22), the reinforcing pin (19) being formed from a plurality of fibres (5) in a polymeric matrix (9), each of the fibres (5) having the form of a helix extending along the length of the reinforcing pin (19).

2. A reinforcing pin according to claim 1, wherein the pin (19) has a non-circular and/or irregular shape in transverse cross-section.

3. A reinforcing pin according to claim 1 or claim 2, wherein said fibres are glass or carbon.

4. A reinforcing pin according to claim 1 or claim 2, wherein said fibres (5) are polymeric, optionally aramid fibres

5. A reinforcing pin according to any preceding claim, wherein said fibres (5) define a corrugated outer surface (20) to the reinforcing pin (19).

6. A laminated composite structure (22) having a plurality of laminae (23) formed of composite material, and at least one reinforcing pin (19) according to any preceding claim, the or each reinforcing pin (19) being provided within the structure (22) so as to extend between adjacent laminae (23).

7. A method for producing a reinforcing pin (19) for use in a laminated composite structure (22), the method comprising the steps of: providing a plurality of fibres (5), wetting said fibres in a curable matrix material (9), drawing said wetted fibres through a heated die (11) to form a partially cured rod (16) of uniform cross-section, collectively twisting the fibres (5) of the rod (16) about the longitudinal axis (17) of the rod (16) so that each fibre (5) adopts a helical configuration, and subsequently curing the matrix material (9) to fix the helical configuration of the fibres (5).

8. A method for producing a reinforcing pin (19) according to claim 7, wherein the heated die (11) defines a cavity (14) through which the wetted fibres (5) are drawn and which has a non-circular shape configured to impart a corresponding non-circular cross-sectional shape to the partially cured rod (16).

9. A method for producing a reinforcing pin according to claim 8, wherein said cavity (14) has an oval shape.

10. A method for producing a reinforcing pin according to claim 7 or claim 8, wherein the heated die (11) defines a cavity (14) through which the wetted fibres (5) are drawn and which has an irregular shape configured to impart a corresponding irregular cross-sectional shape to the partially cured rod (16).

11. A method for producing a reinforcing pin according to any one of claims 7 to 10, wherein said fibres are glass or carbon or polymeric.

12. A method for reinforcing a composite structure (22) having a plurality of laminae (23) of composite material, the method involving the insertion of at least one reinforcing pin (19) in accordance with any one of claims 1 to 5 into the composite structure (22) such that the or each pin (19) extends through at least some of said laminae (23).

13. A method for reinforcing a composite structure according to claim 12, further including the steps of: forming at least one channel (24) within the structure (22), the or each channel (24) extending through at least some of the laminae (23) of the structure and being configured to receive a respective said reinforcing pin (19); inserting the or each said reinforcing pin (19) into a respective said channel (24); and at least partially curing the composite material.

14. A method for reinforcing a composite structure according to claim 12 or claim 13, wherein the or each said reinforcing pin (19) is in accordance with claim 8, and the method further involves curing a curable matrix of the composite material so that the matrix flows into corrugations (21) in the outer surface (20) of the or each pin (19) to anchor the pin (19) within the composite structure (22).

15. A method for reinforcing a composite structure according to any one of claims 12 to 14, wherein the or each said reinforcing pin (19) is produced by the method of any one of claims 7 to 11.

## Patentansprüche

1. Verstärkungsstift (19) zum Verstärken einer Schichtverbundstruktur (22), wobei der Verstärkungsstift (19) aus einer Vielzahl von Fasern (5) in einer Polymermatrix (9) geformt wird, wobei jede der Fasern (5) die Form einer Spirale aufweist, die sich entlang der Länge des Verstärkungsstifts (19) erstreckt.

2. Verstärkungsstift nach Anspruch 1, wobei der Stift (19) eine nicht-kreisförmige und/oder unregelmäßige Form im Querschnitt hat.

3. Verstärkungsstift nach Anspruch 1 oder Anspruch 2, wobei die Fasern Glas oder Carbon sind.

4. Verstärkungsstift nach Anspruch 1 oder Anspruch 2, wobei die Fasern (5) polymerische Fasern, optional Aramidfasern sind.

5. Verstärkungsstift nach einem der vorstehenden Ansprüche, wobei die Fasern (5) eine gewellte Außenfläche (20) des Verstärkungsstifts (19) definieren.

6. Schichtverbundstruktur (22) mit einer Vielzahl von aus Verbundmaterial geformten Schichten (23) und mindestens einem Verstärkungsstift (19) nach einem der vorstehenden Ansprüche, wobei der oder jeder Verstärkungsstift (19) in der Struktur (22) bereitgestellt ist, um sich zwischen angrenzenden Schichten (23) zu erstrecken.

7. Verfahren zum Herstellen eines Verstärkungsstifts (19) zur Verwendung in einer Schichtverbundstruktur (22), wobei das Verfahren die folgenden Schritte umfasst: Bereitstellen einer Vielzahl von Fasern (5), Benetzen der Fasern in einem aushärtbaren Matrixmaterial (9), Ziehen der benetzten Fasern durch eine beheizte Matrize (11) um eine teilweise ausgehärtete Stange (16) mit gleichmäßigem Querschnitt zu formen, gemeinsames Verdrehen der Fasern (5) der Stange (16) um die Längsachse (17) der Stange (16), so dass jede Faser (5) eine spiralförmige Konfiguration annimmt, und anschließendes Aushärten des Matrixmaterials (9), um die spiralförmige Konfiguration an den Fasern (5) zu befestigen.

8. Verfahren zum Herstellen eines Verstärkungsstifts (19) nach Anspruch 7, wobei die beheizte Matrize (11) einen Hohlraum (14) definiert, durch den die benetzten Fasern (5) gezogen werden, und der eine nicht-kreisförmige Form aufweist, die konfiguriert ist, um der teilweise ausgehärteten Stange (16) eine entsprechende nicht-kreisförmige Querschnittsform zu verleihen.

9. Verfahren zum Herstellen eines Verstärkungsstifts nach Anspruch 8, wobei der Hohlraum (14) eine ovale Form aufweist.

10. Verfahren zum Herstellen eines Verstärkungsstifts nach Anspruch 7 oder Anspruch 8, wobei die beheizte Matrize (11) einen Hohlraum (14) definiert, durch den die benetzten Fasern (5) gezogen werden, und der eine unregelmäßige Form aufweist, die konfiguriert ist, um der teilweise ausgehärteten Stange (16) eine entsprechende unregelmäßige Querschnittsform zu verleihen.

11. Verfahren zum Herstellen eines Verstärkungsstifts nach einem der Ansprüche 7 bis 10, wobei die Fasern Glas oder Carbon oder polymerisch sind.

12. Verfahren zum Verstärken einer Verbundstruktur (22) mit einer Vielzahl von Schichten (23) aus Verbundmaterial, wobei das Verfahren das Einführen mindestens eines Verstärkungsstifts (19) gemäß einem der Ansprüche 1 bis 5 in die Verbundstruktur (22) beinhaltet, so dass der oder jeder Stift (19) sich durch mindestens einige der Schichten (23) erstreckt.

13. Verfahren zum Verstärken einer Verbundstruktur nach Anspruch 12, enthaltend die Schritte: Formen mindestens eines Kanals (24) in der Struktur (22), wobei sich der oder jeder Kanal (24) durch mindestens einige der Schichten (23) der Struktur erstreckt, und konfiguriert ist, um einen jeweiligen Verstärkungsstift (19) aufzunehmen; Einführen des oder jedes Verstärkungsstifts (19) in einen jeweiligen Kanal (24); und mindestens teilweises Aushärten des Verbundmaterials.

14. Verfahren zum Verstärken einer Verbundstruktur nach Anspruch 12 oder Anspruch 13, wobei der oder jeder Verstärkungsstift (19) mit Anspruch 8 übereinstimmt, und das Verfahren ferner das Aushärten einer aushärtbaren Matrix des Verbundmaterials beinhaltet, so dass die Matrix in Wellen (21) in der Außenfläche (20) des oder jedes Stifts (19) fließt, um den Stift (19) in der Verbundstruktur (22) zu verankern.

15. Verfahren zum Verstärken einer Verbundstruktur nach einem der Ansprüche 12 bis 14, wobei der oder jeder Verstärkungsstift (19) durch das Verfahren nach einem der Ansprüche 7 bis 11 hergestellt wird.

## Revendications

1. Cheville de renforcement (19) pour le renforcement d'une structure composite stratifiée (22), la cheville de renforcement (19) étant composée d'une pluralité de fibres (5) dans une matrice polymère (9), chacune des fibres (5) ayant la forme d'une hélice s'étendant tout au long de la cheville de renforcement (19).

2. Cheville de renforcement selon la revendication 1, la cheville (19) ayant une forme non circulaire et/ou irrégulière dans sa section transversale.

3. Cheville de renforcement selon la revendication 1 ou la revendication 2, lesdites fibres étant de verre ou de carbone.

4. Cheville de renforcement selon la revendication 1 ou la revendication 2, lesdites fibres (5) étant polymères, en option des fibres aramide.

5. Cheville de renforcement selon une quelconque des revendications précédentes, lesdites fibres (5) définissant une surface externe ondulée (20) de la cheville de renforcement (19).

6. Structure composite stratifiée (22) possédant une pluralité de lamelles (23) réalisées en matière composite, et au moins une cheville de renforcement (19) selon une quelconque des revendications précédentes, la ou chaque cheville de renforcement (19) étant placée au sein de la structure (22) de façon à s'étendre entre lamelles adjacentes (23).

7. Méthode de production d'une cheville de renforcement (19) pour l'utilisation dans une structure composite stratifiée (22), la méthode comprenant les étapes suivantes : mise en place d'une pluralité de fibres (5), mouillage desdites fibres en une matière à matrice durcissable (9), étirage desdites fibres mouillées dans une matrice chauffée (11) pour former une tige partiellement durcie (16) à section transversale uniforme, torsion collective des fibres (5) de la tige (16) autour de l'axe longitudinal (17) de la tige (16) de sorte que chaque fibre (5) adopte une configuration hélicoïdale, et, par la suite, durcissement de la matière à matrice (9) pour fixer la configuration hélicoïdale des fibres (5).

8. Méthode de production d'une cheville de renforcement (19) selon la revendication 7, la matrice chauffée (11) définissant une cavité (14) à travers laquelle les fibres mouillées (5) sont étirées, et ayant une forme non circulaire configurée pour donner une forme transversale non circulaire correspondante à la tige partiellement durcie (16).

9. Méthode de production d'une cheville de renforcement selon la revendication 8, ladite cavité (14) ayant une forme ovale.

10. Méthode de production d'une cheville de renforcement selon la revendication 7 ou la revendication 8, la matrice chauffée (11) définissant une cavité (14) à travers laquelle les fibres mouillées (5) sont étirées, et ayant une forme irrégulière configurée pour donner une forme transversale irrégulière correspondante à la tige partiellement durcie (16).

11. Méthode de production d'une cheville de renforcement selon une quelconque des revendications 7 à 10, lesdites fibres étant des fibres de verre, de carbone ou polymères.

12. Méthode de renforcement d'une structure composite (22) possédant une pluralité de lamelles (23) d'une matière composite, la méthode comportant l'insertion d'au moins une cheville de renforcement (19) selon une quelconque des revendications 1 à 5 dans la structure composite (22) de sorte que la ou chaque cheville (19) s'étende à travers certaines desdites lamelles (23).

13. Méthode de renforcement d'une structure composite selon la revendication 12, comprenant en outre les étapes suivantes : formation d'au moins un canal (24) dans la structure (22), le ou chaque canal (24) s'étendant à travers au moins certaines des lamelles (23) de la structure, et étant configuré pour recevoir une cheville de renforcement (19) respective ; insertion de ladite cheville de renforcement (19), ou chacune de celles-ci, dans un canal (24) correspondant ; et durcissement au moins partiellement de la matière composite.

14. Méthode de renforcement d'une structure composite selon la revendication 12 ou la revendication 13, la cheville de renforcement (19), ou chacune de celles-ci, étant conforme à la revendication 8, et la méthode comprenant en outre le durcissement d'une matrice durcissable de la matière composite, afin que la matrice s'écoule dans les ondulations (21) dans la surface externe (20) de la ou chaque cheville de renforcement (19) pour ancrer la cheville (19) dans la structure composite (22).

15. Méthode de renforcement d'une structure composite selon une quelconque des revendications 12 à 14, la ou chaque cheville de renforcement (19) étant produite par la méthode selon une quelconque des revendications 7 à 11.
